# EUROPEAN PATENT APPLICATION

(11) **EP 3 238 923 A1**
(43) Date of publication of application: **01.11.2017**
(21) Application number: 16167297.7
(22) Date of filing: 27.04.2016
(51) Int. Cl.: B29C 70/44, B29C 70/68, B29C 70/86, B29B 11/16, B29C 44/12, B29C 70/30, A63B 59/70, A63B 60/52, A63B 60/54, A63B 102/24, A63B 102/22, A63B 102/18

(54) **SPORTS RACKET WITH CORE-EMBEDDED STRUTS AND METHOD FOR PRODUCING**

(71) Applicant: Munich Composites GmbH, 82024 Taufkirchen (DE)
(72) Inventor: Rueger, Olaf, 83052 Bruckmuehl (DE); Froehlich, Felix, 85774 Unterfoehring (DE); Schranz, Christoph, 81369 Muenchen (DE); Nelson, Nathaniel, Mount Martha,, Victoria 3934 (AU)
(74) Representative: Winter, Brandl, Fürniss, Hübner, Röss, Kaiser, Polte - Partnerschaft mbB

(57) **Abstract**

The invention concerns a sports racket (1) with a core (3) of a synthetic foam material, with the core (3) being covered with at least one layer (4) of one or more reinforcement fibers, wherein a plurality of struts (6) are embedded within the core (3) and fixed to the inside of the layer (4) of the one or more reinforcement fibers. The invention also concerns a method to produce such a sports racket (1).

## Description

The invention concerns a sports racket, such as a (ice- / field-) hockey stick or a baseball bat, with a core of synthetic foam material, wherein the core is covered with at least one layer of one or more reinforcement fibers. Consequently the invention concerns sports equipment used for hitting balls, pucks or other ball like playing objects.

Related prior art is for example known of WO 2015/122768 A1. In this patent application a method of manufacturing an elongated article is disclosed. This elongated article is having a shaft and a functional head section. The method comprises the steps of providing the dimensionally stable core mandrel, overlaying first reinforcement fibers onto the core mandrel to form one or more first wall parts, providing at least one shaping element to the overlaid core mandrel, overlaying second reinforcing fibers onto the core mandrel and the at least one shaping element to form one or more second wall parts, providing a matrix material and consolidating the matrix material, wherein the core mandrel is provided to form an elongated article having a well defined inner cavity. Overlaying the fibers is preferably performed by in-situ braiding. The cross-section of the elongated article comprises fiber reinforced wall parts that impart stiffness to the article. Neither cavity may be filled with weight distributing element(s).

Since the 90's foam cores with braided sleeves are known. Many times an RTM process is used during the production.

See for example https://www.youtube.com/watch?v=Rkkv3DrmwA8.

Usually so-called blow mould sticks are used and such sports rackets with two or more cores are used. Each of said cores is covered by one layer or more layers of reinforcement fibers. Then the both distinctly covered cores with reinforcement fibers are in combination covered by another layer or more layers of reinforcement fibers. When those sports rackets are used, it becomes clear, that their efficiency in usage is not high enough. As many sports rackets, such as ice-hockey sticks, field-hockey sticks, lacrosse sticks or comparable sports rackets have normally a formed curve or a bent, which is necessary to hit some ball or puck. However in this curve / bent in those sports rackets of the prior art, the fibers in the area of the curve do not lay in a tension adequate manner. The force cannot be transmitted adequately in such an area. Breakage is often the consequence. It shall be brought to mind, that only field hockey sticks have a bend in the shaft.

Related prior art is also known of the article MANUFACTURING AND FLEXURAL TESTING OF COMPOSITE BRAIDED HOCKEY STICKS WITH EMBEDDED FIBER OPTIC SENSORS of M. Selezneva, C. Poon, A. Nakai, X. Gu, Z. Fawaz, K. Behdinan, V. Kulisek, focusing on a braided hockey stick, which is produced with an overbraiding technique. A braided sleeve on an ice-hockey stick is also disclosed in www.braider.com/case-studies/high-tec-hockey-sticks.afpx, focusing on a high tech hockey stick.

Related prior art is also disclosed in US-RE40426 E1. Therein a method of manufacturing a hockey stick blade with a braided fiber envelope is disclosed. A braided fiber envelope is slid over a core therein.

Further ice-hockey sticks with tri-axially braided covering are known of an article with the title "Development of Ice Hockey Sticks using Braided Composites" of the authors Shinichi NASU, Akio OHTANI, Asami NAKAI, Hiroyuki HAMADA. In this study, ice hockey sticks were fabricated by using braiding technique. The relationships between the braiding angle and mechanical properties of rectangular braided sticks were investigated by three-point bending test. It is found in this article, that braiding technology can realize ice hockey sticks which have various mechanical properties and safety features.

In the Internet a so called "Grays G500 Shorti Field Hockey Stick" is disclosed, focusing on a braid around shaft, which supposedly forms superior bond with wood and composites, thereby increasing striking power of the stick.

The past has shown that the usage of more than one core in a sports racket has severe drawbacks in regards of costs and stability.

It is the object of the current invention to avoid those drawbacks and preferably eliminate them totally. It is especially the object to provide a sports racket with optimal handling, being lightweight, having high stiffness and a long life.

The object of the invention is solved by a sports racket according to the features of the preamble with a novelty of comprising a plurality of struts / beams / stays / braces / supports / bars / stiffeners being embedded within the core and fixed to the inside of the preferably innermost layer of the one or more reinforcement fibers. By "embedded" it is hereby understood that except of the front face / front side / face side all other sides / faces of the strut are in close contact with the synthetic foam material of the core and/or at least partly covered by said material.

By enhancing a sports racket according to the features of claim 1 the longevity is enhanced. The balance point can be better positioned and adjusted. Further the behavior in regards of vibration can be optimized. The position of the so-called "sweet spot" can be willingly adjusted, e.g. by planning its position. Vibration reducing material can be used. The weight balance can be adjusted to the respective athlete. Custom-made sports rackets with better performance are the result.

Special embodiments are part of dependent claims and are described in more detail in the following.

It is of advantage, when the struts are oriented such as to follow (for example exactly) the longitudinal direction and/or the neutral axis / neutral fiber of the sports racket or are crossly oriented to it. The stability is enhanced. In the first option the production is simplified, whereas in the second alternative an especially uniform stiffness is achievable.

If the struts are configured of reinforcement patches without resin or embedded in resin / at least partly covered with resin, two different methods for production can be used, depending on the respective requirements of the production facility.

It is an advantage, if the reinforcement patches comprise one or more reinforcement fibers, as the stiffness is then higher.

It is appropriate when the reinforcement fibers of the layer and/or the reinforcement patches comprise the same kind of reinforcement fibers. Alternatively lighter reinforcement fibers may be used in said layer, covering the core than in the reinforcement patches. A vice versa solution is also possible.

Further, it is of an advantage, if the reinforcement fibers are configured as a single kind of fiber or a mixture of fibers of the group of carbon fibers, glass fibers, aramide fibers, natural fibers, such as flax fibers, hemp fibers, jute fibers or basalt fibers.

A positive effect can be noticed, when a handle area at the first distal end is integrally attached to a hitting area via a middle part. When the same is provided, a single one piece sports racket is producible which is especially prepared against falling apart when being hit by the ball and other sports equipment during a match.

The loading capacity is optimized, when the hitting area is having a flat area on one side and possibly a convex outer surface on the other side.

It can be an advantage, when the hitting area is terminating at a second distal end in an arc / bow / bend / curve, e.g. for field hockey sticks.

When a void is opening from the first distal end of the handle area in the direction of the middle part, preferably along the longitudinal direction / neutral axis / neutral fiber, weight and balance of the sports racket can be optimized.

It is beneficial for the load capacity, when the struts completely cross the cross-section of the core, especially so as to get in fixed contact to the layer covering the core of synthetic material.

It is of advantage, when some or all of the struts have a straight or bend rectangular cross section or a round / elliptical cross section when viewed in a central plane comprising the neutral axis / neutral fiber. In this regard it is of an advantage, when the struts are leading from a hitting face of the sports racket to the convexly formed layer on its other side. It is clear that some items, like ice hockey sticks, may be flat.

The production can be optimized, when the reinforcement patches are each configured as randomly oriented fibers, as a mesh, as a combination of rovings, wherein the rovings of one patch layer are oriented in parallel, as knitted material, as knotted fabric, as a weave, as a non-crimp fabric, as a braided sleeve or as a narrow band textile.

When the patches have a straight configuration, a (possibly) continuously bent configuration, potentially with a jump discontinuity along the direction of its width, the hitting capacity depending on the preferences of the athlete, can be efficiently adjusted.

The void shall be configured as a blind hole and/or a bore hole to be especially easily producible.

For the acceptance by the athlete, it is of an advantage, if the void extends over the full cross section of the handle from one side of the inner surface of the (innermost) layer of reinforcement fibers to the other side of a natural axis along the inner circumferences of the inner surface of the (innermost) layer of reinforcement fibers.

Further, it is of advantage, if the struts are (cozily) positioned within respective recesses of the core.

It has been shown in experiments, that a void shall have a length of about 20 cm to 30 cm.

When the core is of such material as to enhance the damping properties of the sports racket, the feeling when playing such a sports racket is excellent.

It is positively received when the struts are having a snake-like configuration.

When one strut or more struts positioned such as to willingly position a sweet spot exactly, the acceptance of the athlete can be further heightened.

An advantage can also be noticed, when one of the struts or more struts comprise / comprises caoutchouc or other damping material. Alternatively rubber or gum can be used. Same can be vulcanized. The fibers of the covering layers cross each other mesh-like in a special embodiment. In another embodiment the first plurality of fibers is positively oriented, a second plurality is negatively oriented and a third plurality is neutrally oriented, so that fibers of each group are crossing fibers of the other groups, preferably in an intermitting way. So-called "plus" fibers, "minus" fibers and "zero degree" fibers are usable.

When one of the outer layer brace or more outer layer braces are in contact with the one or more layers of reinforcement fibers, strain, stress and/or force can be transmitted such that the sports racket is not damaged during even hard usage.

It is of advantage, when the brace is positioned between the outer layer and the core.

In this regard it has been discovered that a beneficial effect can be noticed when at least two braces exist, wherein they are positioned on contrary sides of a neutral axis / neutral fiber.

In that the braces are configured as a sleeve, a hose, a netting, especially a netted tube / hose, the stiffness of the readily produced sports racket is improved.

It is also beneficial, when so-called hit optimation recesses are included in the core, which are filled with weight enhancing material, such as sand and/or plastic, for example an injection molded part.

It is also of advantage, when the (outer) layer (completely) covering the core is comprising reinforcement fibers and/or resin, such as a duroplastic or thermoplastic material.

If between multiple layers of reinforcement fibers or between one layer of reinforcement fibers and the core at least one damping element with elastic properties is positioned or a plurality of such damping elements is positioned, the hit damping characteristic are optimized.

To minimize the costs of production and simplify the production, it is desirable that the at least one damping element is including caoutchouc, gum, rubber and/or is having an adhesion to the used resin and/or to the reinforcement fibers of the layer.

Another special embodiment is characterized in that the at least one layer is a discontinuous segment, when seen along the neutral axis.

The invention concerns further a core of synthetic material, configured to be covered with at least one layer of reinforcement fibers to form a sports racket, characterized in that a plurality of recesses are included, wherein the recesses are oriented transversely to the longitudinal direction and/or neutral axis.

Such a core can be improved, if the recesses are configures as through holes, which are extending from one surface of the core to the opposite surface of the core.

It is desirable to use drilling, cutting, milling, other chip removing processes or stamping to produce the recesses and/or one or more hit optimation recesses are produced by such processes, as an adequate cost-quality relation is achievable.

The invention concerns also a method for producing a sports racket, preferably according to the one as specified before, comprising a step of providing a closable mould, wherein the mould is having a first part with ribs configured to provide recesses for straps, followed by the step of filling the mould with preferably expanding or expandable synthetic foam material. By doing so, a core, especially a single core to be used in a sports racket can be cost-efficiently produced.

In this regard it is beneficial, as claimed in the dependent claims, if a consecutive step of hardening the foam core is used, in which same is extracted of the mould and reinforcement patches are inserted in the recesses.

In this regard it has been proven to be beneficial, when a plate, preferably of metallic material is folded in inside of a reinforcement patch, meaning that the reinforcement patch is folded around the plate. By doing so, the reinforcement patch can be easily inserted in the core and prepared for its further usage within the outer layers of reinforcement fibers.

It is also beneficial, when the fibers of the reinforcement patch are (partly or completely) cut along those two opposing sides of the plate, which are supposed to be both closely to the future outer core covering layer of reinforcement fibers. By doing so, they necessarily / inevitably come into contact with the other reinforcement fibers of the core covering layer. A very good bond can be achieved.

It is of advantage, when the plates are removed from the core wherein the reinforcement patches remain in the core.

Another advantageously embodiment is seen in the method wherein the core is braided by reinforcement fibers, preferably after one or more braces are positioned on the outside of the core. The core is consequently covered by reinforcement fibers in a braid producing manner.

When the reinforcement fibers of the patches and/or the core covering layer(s) are covered in resin and thereafter the resin is cured, an efficient sequence of steps can be utilized.

A method of special advantage concerns a void which is drilled in a handle along the neutral fiber from a first distal end, preferably without damaging the core covering layer(s).

It is also of an advantage, when the braces are crimped, stapled and/or glued to the core or the core covering layer. Especially the stapling has proven to be of advantage. Same can also be part of a divisional application, not necessarily including the features of the current independent claims.

The invention has been noticed to be of great advantage; especially as preforms can be used, such as TFP reinforcements, FPP reinforcements, braid preforms and small / narrow band textiles. Also edge reinforcements can be provisioned in or on the core as "corner-strengtheners". During the manufacturing the preformed subpreforms may be introduced / applied.

There may be sloping / oblique / diagonal / transverse / angular recesses for the stays / beams / struts which are to be included in the core. Those recesses can be configured such as slits / grooves / notches / ports / slots / trenches.

Those slots may go along the full width of the racket. A combination of slits / grooves and holes, especially of circular or elliptical cross sections may be used.

In other words the invention concerns a hockey stick with a foam core with continuous openings, which combine an upper and a lower side of the stick with each other wherein the preferably dry reinforcement fibers fill said openings / apertures, wherein said combination is afterwards completely covered with dry fibers to be injected with resin. Said covering layer can be configured as a jacket / coating / sheathing.

Said sheathing can make use of carbon fibers, glass fibers, aramide fibers and/or natural fibers.

Different geometries concerning the continuous reinforcements, using slits, holes or combinations of same, can be applied. It is of an advantage to have continuous reinforcements in the handle. The foam core can be formed such that areas for additional fibers producing edge reinforcements can be provided. Consequently the weight and balance of the completed stick / racket is efficiently positionable. Wide holes for a weight optimation are beneficial.

The invention is also described with help of drawings. In those drawings different embodiments are displayed. Those figures show:
- Fig. 1: a longitudinal section of a first embodiment of a sports racket in the form of a hockey stick,
- Fig. 2: a longitudinal section of a second embodiment of a sports racket in the form of a hockey stick,
- Fig. 3: a longitudinal section of a third embodiment of a sports racket in the form of a hockey stick,

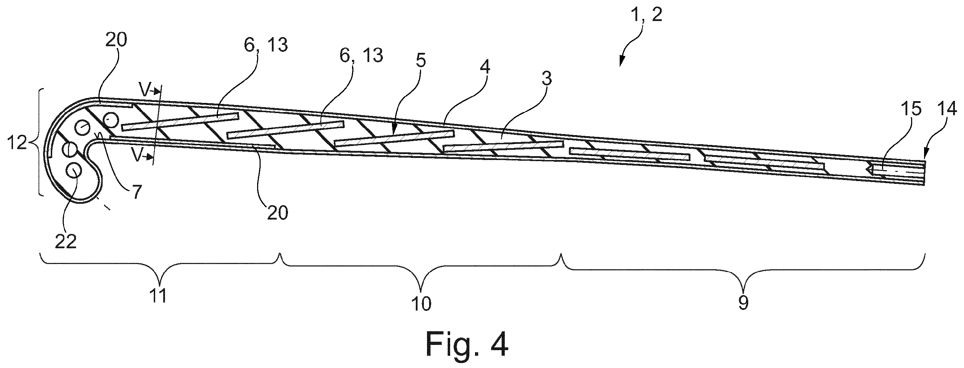

- Fig. 4: a longitudinal section of a fourth embodiment of a sports racket in the form of a hockey stick, and
- Fig. 5: a transverse section through hockey sticks of the embodiments shown in figs. 1 to 4.

The figures are of schematical nature and intended only to enhance the understanding of the invention. Features of the single embodiments can be combined with one another. The respective features are therefore interchangeable with one another.

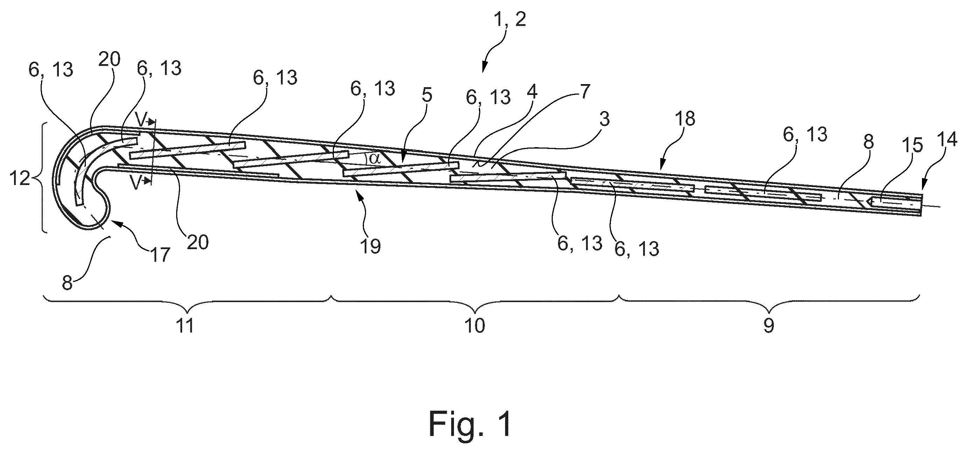

In fig. 1 a first embodiment of a sports racket 1 in the form of a field hockey stick 2 is displayed. Said field hockey stick 2 has a core 3 of synthetic foam material 3. Said core 3 is covered with one layer 4 comprising a plurality of reinforcement fibers.

Within the core 3 recesses 5 are filled by struts 6. Those struts 6 can also be named braces / supports / bars or stiffeners. They are embedded within the core 3 and fixed to the inside of said layer 4. They are fixed to an inner surface 7 of the layer 4, especially the innermost layer in contact with the core 3.

A neutral axis 8, also definable as neutral fiber defines the longitudinal direction of the sports racket 1. It has to be noted that the longitudinal direction follows in the area of a handle 9 exactly the neutral axis 8, same as in a middle part 10. However, in a hitting area 11 the sports racket 1 follows a bow 12. The neutral axis / neutral fiber 8 therefore turns therein. The struts 6 are configured as reinforcement patches 13. At a first distal end 14 a void 15 is created via a drilling / chipping procedure into the foam of the core 3.

The reinforcement patches 13 are tilted in relation to the neutral axis / neutral fiber 8 about 0° to 90°, especially 7°.

The reinforcement patches have a length measured mainly in the direction of the longitudinal direction of the sports racket, so that the width is measured orthogonally to it.

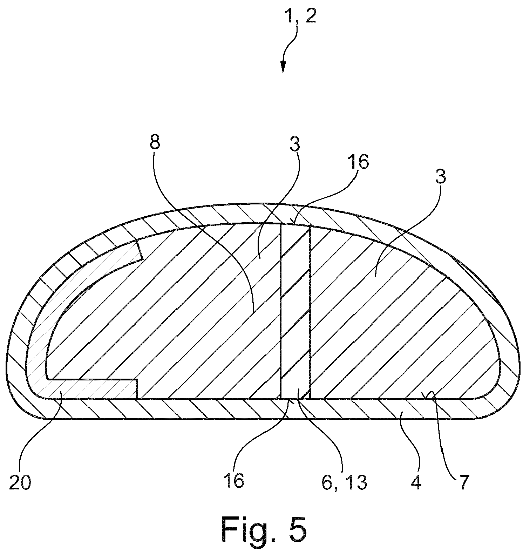

The stern faces / front sides of the struts 6 are supplied with the reference number 16, as can be seen in fig.5.

Returning to fig. 1, it can be seen that the struts 6 are straightly configured along their longitudinal direction. However, 1, 2, 3, 4, 5, 6, 7, 8, 9, 10, 11, 12 or more separate struts 6 can be used. The two struts 6 most closely positioned to the void 15 are exactly following the neutral fiber 8, whereas all the other struts 6 are tilted about the angle α of about 7° to the neutral axis 8 of the sports racket 1. Same is also conducted for the strut 6 being furthest away from the first distal end 14, i.e. nearest to a second distal end 17 of the sports racket 1.

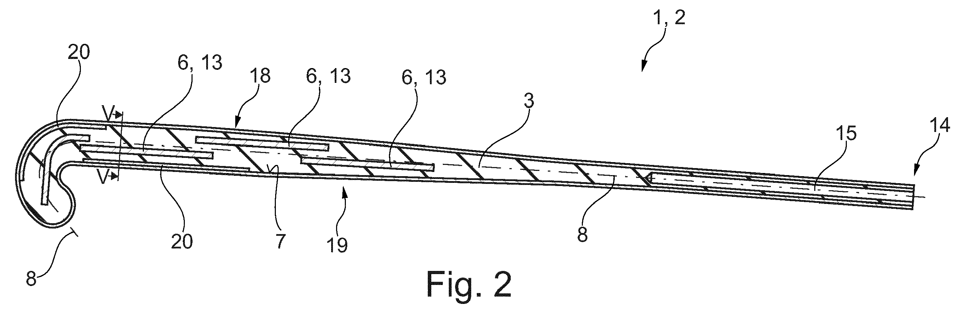

In contrast to the embodiment of fig. 1, in the second embodiment of fig. 2 the struts 6 are positioned alternating to one another so that one strut is closer to a first side 18 than to a second side 19. As in the first embodiment, at least two braces 20 are used, similarily to corner reinforcements. The outer layer 4 is configured as a netting / network / meshwork / braid.

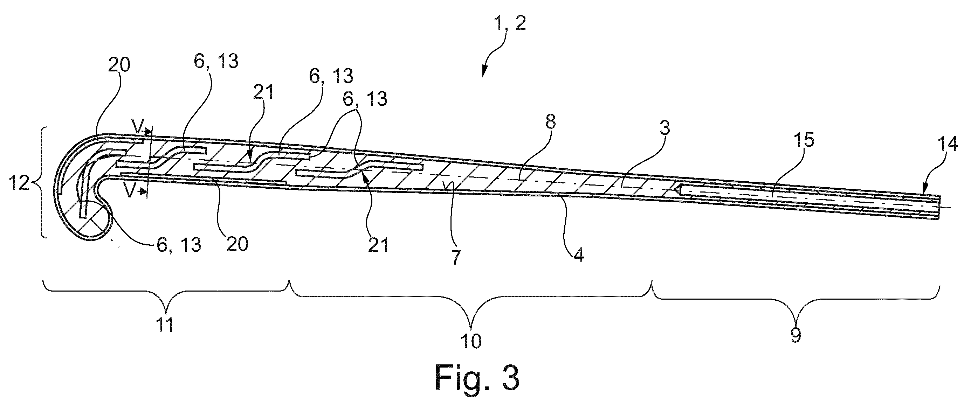

Whereas in the embodiment according to fig. 2 the struts 6 exactly follow the direction of the neutral axis 8 or mainly follow said direction, in an imprecate / imprecated / imprecative manner, a comparable configuration can be realized in the embodiment according to fig. 3. However, therein the struts 6 have a jump discontinuity 21. They have been configured with a "snake-like configuration".

In addition to those recesses 5 being of slit-like configuration, holes 22 are introduced in the arc / bow / bend 12 of the hitting area 11. Said holes 22 have a circular circumference and extend, same as the slit-like recesses 5, from one inner side of the layer 4 to the other inner side, along the width of the sports racket 1. This also becomes clear by studying fig. 5.

### Reference List

- 1: sports racket
- 2: field-hockey stick
- 3: core
- 4: layer
- 5: recess
- 6: strut
- 7: inner surface
- 8: neutral axis / neutral fiber
- 9: candle
- 10: middle part
- 11: hitting area
- 12: arc / bow / bend
- 13: reinforcement patch
- 14: first distal end
- 15: void
- 16: front side / face side / front face
- 17: second distal end
- 18: first side
- 19: second side
- 20: brace
- 21: jump discontinuity
- 22: hole

## Claims

1. Sports racket (1) with a core (3) of a synthetic foam material, with the core (3) being covered with at least one layer (4) of one or more reinforcement fibers, **characterized in** comprising a plurality of struts (6) being embedded within the core (3) and fixed to the inside of the layer (4) of the one or more reinforcement fibers.

2. Sports racket (1) according to claim 1, **characterized in that** the struts (6) are oriented such as to follow the longitudinal direction and/or neutral axis (8) of a sports racket (1) or being crossly oriented to it.

3. Sports racket (1) according to claim 1 or 2, **characterized in that** the struts (6) are configured of reinforcement patches (13) without resin.

4. Sports racket (1) according to claim 3, **characterized in that** the reinforcement patches (13) are comprising one or more reinforcement fibers.

5. Sports racket (1) according to claim 3 or 4, **characterized in that** the reinforcement fibers of the layer (4) and/or the reinforcement patches (13) are comprising the same kind of reinforcement fibers.

6. Sports racket (1) according to of the foregoing claims, **characterized in that** between multiple layers (4) of reinforcement fibers or between one layer (4) of reinforcements fibers and the core (3) at least one damping element with elastic properties is positioned or a plurality of such damping elements is positioned.

7. Sports racket (1) according to claim 6, **characterized in that** the at least one damping element is including caoutchouc, gum, rubber and/or is having an adhesion the used resin and/or the reinforcement fibers of the layer(4).

8. Sports racket (1) according to claim 6 or 7, **characterized in that** the at least one layer (4) is a discontinuous segment, when seen along the neutral axis (8).

9. Core (3) of synthetic material, configured to be covered with at least one layer (4) of reinforcement fibers to form a sports racket (1), **characterized in that** a plurality of recesses (5) are included, wherein the recesses (5) are oriented transversely to the longitudinal direction and/or neutral axis (8).

10. Core (3) according to claim 6, **characterized in that** the recesses (5) are through holes extending from one surface of the core (3) to the opposite surface of the core (3).

11. Core (3) according to claim 6 or 7, **characterized in that** the recesses (3) are having edges achieved by drilling, cutting, milling, other chip removing processes or stamping.

12. Method for producing a sports racket (1) preferably according to one of the foregoing claims, comprising the step of providing a closable mould, wherein the mould is having a first part with ribs configured to provide recesses (5) for struts (6), followed by the step of filling the mould of synthetic foam material.

13. Method according to claim 6, **characterized in that** as a consecutive step the hardened foam core (3) is extracted of the mould and reinforcement patches (13) are inserted in the recesses (5).
